# EUROPEAN PATENT SPECIFICATION

(11) **EP 0 455 462 B1**
(45) Date of publication and mention of the grant of the patent: **02.08.1995**
(21) Application number: 91303894.9
(22) Date of filing: 30.04.1991
(51) Int. Cl.: F16B 13/14

(54) **Improvements in the method and means of fixing anchors**
Verfahren und Mittel zum Befestigen von Verankerungselementen
Méthode et moyens pour la fixation d'éléments d'ancrage

(30) Priority: 30.04.1990 GB 9009641
(43) Date of publication of application: 06.11.1991
(73) Proprietor: Payne, David Patrick, Surbiton Surrey KT5 8QD (GB)
(72) Inventor: Payne, David Patrick, Surbiton Surrey KT5 8QD (GB)
(74) Representative: Alexander, Thomas Bruce

(56) References cited:
- EP-A- 0 275 377
- EP-A- 0 399 165
- FR-A- 2 519 097
- FR-A- 2 614 912

## Description

This invention relates to improvements in the method and means of fixing anchors in building components having voids therein.

Many building components, such as cast concrete blocks, checker bricks, sleeve bricks and the like include voids therein to reduce the overall weight of the component. This has a beneficial effect on reducing the stress on the foundations of a building made of such components, and simplifies the handling of the products.

Problems however are created in securing anchors in such components because of the lack of support on the anchor in the region of the voids.

Some solutions have been proposed. For example, EP 0014728 suggests injecting a hardenable material into an expandable envelope secured to a dowel shank to fill the region of a void; DE 3225051 suggests the use of a sheath surrounding a dowel body which is forced to expand into the cavity by injecting a hardenable material through holes in a sleeve in the dowel body; EP 0338982 has a mesh like sleeve containing a hardening compound into which a dowel is driven to force the component throught the perforations in the sleeve to fill the void.

None of these anchors are particularly suitable for building components in which the size of the voids is substantial. In most cases the weight of the resin or other hardenable material required to anchor the component would outweight the building material removed from the void, to make the process costly and inefficient.

The object of the present invention is to overcome these disadvantages.

According to the invention there is provided a method of fixing an anchor in a cavity in a building component comprising the steps of forming a first bore in the building component, said bore having a mouth in a wall of said cavity, which wall is at an angle to the axis of the anchor, positioning a sleeve member on a solid anchor rod, inserting said rod into the bore and injecting a hardenable material into the sleeve around the outside of the rod, characterised in that there is provided an orifice in the outer wall of the sleeve member which is located adjacent said cavity wall, such that, when the hardenable material is injected into the sleeve some of the material escapes from the said orifice into the cavity and forms a plug adjacent the said cavity wall, which when hardened prevents the anchor from being withdrawn from said building component.

According to the invention there is also provided an anchor for use in the aforementioned method.

Further features and advantages of the invention will be apparent from the following description, by way of example, as some preferred embodiments of the invention, the description being read with reference to the accompanying drawings in which:-
Fig. 1 is a section through part of a building structure showing an anchor anchoring in a void in a building structure in accordance with the present invention; and
Fig. 2a is a cross section of a sleeve being a part of the anchor of claim 1 on the line IV-IV;
Fig. 2b is a cross section of the sleeve of Fig. 2a on the line III-III of Fig. 1;
Fig. 2c is a cross section of an alternative sleeve to that of Figs. 2a and 2b; and
Fig 3. is a part sectional view of the wall anchor of Fig. 1 in a series of voids in a building structure.

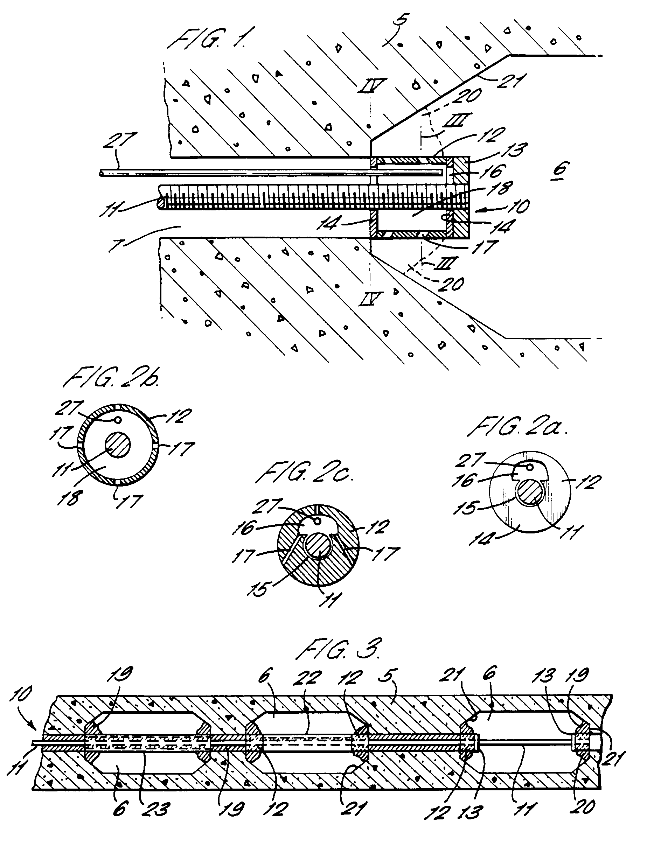

Referring first to Fig. 1, there is shown a building component 5 having a void 6 therein. The building component may be of precast concrete, brick or any other building material. It should be appreciated that the building structure can either comprise a wall or a floor element or any building structure where an anchor is required in a component which has a void or voids therein.

Located within a bore 7 in the building component 5 is an anchor 10 such that one end protrudes into the void 6. The anchor 10 comprises a threaded or grooved rod 11 of stainless steel or other suitable material on which is located a substantially cylindrical sleeve 12 and washer 13. As can be seen from Figs. 1 and 2a the sleeve 12 is mounted on the part of the rod 11 which protrudes into the void 6 and is held in position by its end caps 14 which have therein a bore 15 which closely fits around a substantial portion of the surface of the rod 11. The bore 15 is extended to provide an orifice 16 to allow the passage of a feeder pipe 27 into the sleeve 12.

Fig. 2b shows the cross section of the sleeve 12 on line III-III, which illustrates the chamber 18 surrounding the rod 11.

As can be seen from Figs. 1 and 2b a number of inclined ports 17 are provided from the chamber 18 surrounding the rod 11 to the sleeve's surface in the cylindrical portion of the sleeve 12 between the end caps 14. These ports can either be holes or slots.

A washer 13 is provided on the end of the rod 11 to seal off the bore 15 and feeder pipe orifice 16 in the sleeve 12.

In use, a washer 13 and sleeve 12 are positioned on the end of rod 11 and inserted through the bore 7 in the building component 5. When the end cap 14 of sleeve 12 furthest from the washer 13 is adjacent the mouth of void 6, or a portion of the sleeve 12 still lies within bore 7, a feeder pipe 27 is inserted through the bore 7 and through the pipe orifice 17 into the chamber 18. Resin binder 19 is then introduced into the chamber 18. Once the chamber 18 is filled with resin 19, the resin escapes via the holes 17 into the void 6 and builds up against the inside surface 21 of the void 6. Sufficient resin 19 is injected to form a plug 20 as shown in broken lines in Fig. 1. The sleeve 12 may then be sealed off or more resin 19 injected to fill the bore 7 surrounding the rod 11. When the resin binder 19 is hardened it forms a partial mechanical fixing within the void 6, in the holes 17, in the bore 18 and surrounding the rod 11 which prevents the anchor from being removed from the building component 5.

Fig. 2c illustrates a different cross section of the sleeve 12 which is constant throughout the length of the sleeve. In this embodiment the holes 17 (or slots where appropriate) are directly connected to the orifice 16.

The actual cross section of the sleeve 12 may be varied in other ways as long as there are means for retaining the sleeve 12 on the rod 11, either integral with sleeve 12 or separately, whereby the resin 19 may be injected into a bore therein and is allowed to escape through the holes or slot 17.

Fig. 3 illustrates a number of different ways in which the invention can also be used. The right hand section of Fig. 3 illustrates a similar arrangement to that of Fig. 1, except that the rod 11 extends through washer 13 and another sleeve 12 and washer 13 arrangement is provided at the opposite end of the void 6. The washers 13 in this arrangement will have the same cross section as shown in Fig. 2a and when the first sleeve 12 is filled the feeder pipe 27 is withdrawn and the washer 13 rotated to seal the sleeve 12. The washer 13 adjacent of the next sleeve 12 is then rotated to seal it and more resin injected into that sleeve.

The middle section of Fig. 3 shows a pair of sleeves 12 at each end of the void 6 and instead of having separate washers with each sleeve 12, 13, a long sleeve element 22 having the same cross section as the end portions 14 of the sleeve 12 extends between the two sleeves 12. In use, the orifice 16 of the long sleeve element 22 would be filled with resin binder 19.

In the left hand section of Fig. 3 there is shown a single sleeve 23 which is similar to an extended version of the sleeve 12, but which only has holes 17 at each end thereof.

These different embodiments of the invention can thus be used to form 1 way or 2 way fixings i.e. preventing the anchor from being moved in just one or two axial directions.

The resin may also be injected to fix the rod 11 in the bore(s) 7.

Thus it can be seen that the present invention is a substantial improvement over the known methods and means of securing wall anchors because the resin is only used where it is required, i.e. it only works against the existing surfaces of the building structure. Furthermore it provides a part mechanical and part adhesive fixing whereas most of the prior art devices provide one or the other. In many of the other variations the hardened material is wasted where it does not touch the existing structure surfaces. Furthermore, in the prior devices which utilise a net or expanding bag, this provides a restriction between the resin and the surface of the building structure. The bond can be increased where the bag or net can be eliminated.

The resin 19 can be a cementitious or epoxy resin or any other suitable hardenable material depending on its use.

It should be noted that the actual positioning of the ports 17 depends on the viscosity of the hardenable material 19 used. If a very viscous material is used then holes 17 can be placed in regular intervals around the entire surface of the sleeve 12. Furthermore, the more viscous the material the larger the holes 17 can be provided to reduce the time required for injecting. The ports 17 may also take the form of slots or other appropriate shapes according to the flowability of the material 19. If the material 19 is not very viscous then fewer or a single hole 17 or slot is better provided at the top of the sleeve 12. Thus when the material 19 escapes from the hole(s) 17 it runs down the outside of sleeve 12 to reach the lower surfaces before hardening.

## Claims

1. A method of fixing an anchor (10) in a cavity (6) in a building component (5) comprising the steps of forming a first bore (7) in the building component, said bore having a mouth in a wall of said cavity, which wall is at an angle to the axis of the anchor, positioning a sleeve member (12) on a solid anchor rod (11), inserting said rod into the bore and injecting a hardenable material (19) into the sleeve around the outside of the rod, characterised in that there is provided an orifice (17) in the outer wall of the sleeve member which is located adjacent said cavity wall, such that, when the hardenable material is injected into the sleeve some of the material escapes from the said orifice into the cavity and forms a plug adjacent the said cavity wall, which when hardened prevents the anchor from being withdrawn from said building component.

2. A method as claimed in claim 1 in which the rod (11) is inserted into the first bore (7), through the cavity (6) and into a second co-axial bore (7) having its mouth in an opposing wall of the cavity.

3. A method as claimed in claim 2 in which the rod (11) is inserted into the two bores (7) such that at least one orifice (17) in each end of the sleeve member (12) is positioned adjacent each of the opposing cavity walls.

4. A method as claimed in claim 2 or claim 3 in which a pair of sleeve members (12) are positioned on the rod (11) in a spaced relationship such that when the rod is inserted into the two bores (7) one sleeve member is positioned adjacent each cavity wall.

5. A method as claimed in claim 4 in which a sleeve element (12) is positioned on the rod (11) between the pair of sleeve members.

6. A method as claimed in any one of the preceding claims further comprising the step of positioning a washer (13) on the rod (11) adjacent the sleeve member (12) for sealing an end of the sleeve member.

7. A method as claimed in claim 6 in which the washer (13) is rotated on the rod (11) relative to the sleeve member (12) to seal the sleeve member.

8. A method as claimed in claim 7 in which a pair of washers (13) are located on the rod (11), one adjacent each of a pair of sleeve members (12) which are positioned adjacent each of a pair of cavity walls, further comprising the steps of injecting the hardenable material (19) into one sleeve member, rotating the adjacent washer to seal the sleeve member and then injecting the hardenable material into the other sleeve member after first rotating the adjacent washer to seal it.

9. A method as claimed in any one of claims 2 to 8 comprising the steps of forming a plurality of co-axial bores (7) between a plurality of cavities (6) in the building components (5) and inserting a rod (11) into all of said bores and forming a plug adjacent a plurality of cavity walls.

10. An anchor (10) for use in the method of claims 1 to 9 comprising a solid anchor rod, a sleeve member (12) located on said anchor rod, said sleeve member having at least one orifice (17) in its outer wall, in which the sleeve member has a port to allow entry of an injection feeder pipe.

11. An anchor (10) as claimed in claim 10 comprising a plurality of sleeve members (12).

12. An anchor (10) as claimed in claim 10 or claim 11 further comprising at least one washer (13) located on the rod adjacent the sleeve member (12).

13. An anchor (10) as claimed in any one of claims 10 to 12 in which the rod (11) has a grooved or threaded surface.

## Patentansprüche

1. Verfahren zum Fixieren eines Ankers (10) in einem Hohlraum (6) in einem Gebäudebauteil (5), umfassend die Schritte: Bilden einer ersten Bohrung (7) in dem Gebäudebauteil, wobei die Bohrung in einer Wandung des Hohlraums eine Mündung aufweist, welche Wandung einen Winkel zur Achse des Ankers aufweist, Positionieren eines Hülsenelements (12) auf einer festen Ankerstange (11), Einführen der Stange in die Bohrung und Einspritzen eines aushärtbaren Materials (19) in die Hülse um die Außenseite der Stange herum,
dadurch gekennzeichnet,
daß eine Öffnung (17) in der Außenwandung des Hülsenelements vorgesehen ist, welche Öffnung benachbart der Hohlraumwandung derart vorgesehen ist, daß dann, wenn das aushärtbare Material in die Hülse eingespritzt wird, ein Teil des Materials von der Öffnung in den Hohlraum entweicht und benachbart der Hohlraumwandung einen Pfropfen bildet, welcher nach dem Aushärten verhindert, daß der Anker aus des Gebäudebauteils herausgezogen wird.

2. Verfahren nach Anspruch 1, in welchem die Stange (11) in die erste Bohrung (7), durch den Hohlraum (6) und in eine zweite koaxiale Bohrung (7) eingeführt wird, welche in einer entgegengesetzten Wandung des Hohlraums ihre Mündung aufweist.

3. Verfahren nach Anspruch 2, in welchem die Stange (11) in die beiden Bohrungen (7) derart eingeführt wird, daß wenigstens eine Öffnung (17) in jedem Ende des Hülsenelements (12) benachbart jeder der entgegengesetzten Hohlraumwandungen angeordnet ist.

4. Verfahren nach Anspruch 2 oder 3, in welchem ein Paar von Hülsenelementen (12) an der Stange (11) in zueinander beabstandeter Beziehung derart angeordnet ist, daß dann, wenn die Stange in die beiden Bohrungen (7) eingeführt ist, ein Hülsenelement benachbart jeder Hohlraumwandung angeordnet ist.

5. Verfahren nach Anspruch 4, in welchem ein Hülsenelement (12) an der Stange (11) zwischen dem Paar von Hülsenelementen angeordnet ist.

6. Verfahren nach einem der vorhergehenden Ansprüche, ferner umfassend den Schritt des Positionierens einer Scheibe (13) an der Stange (11) benachbart dem Hülsenelement (12) zum Abdichten eines Endes des Hülsenelements.

7. Verfahren nach Anspruch 6, in welchem die Scheibe (13) zum Abdichten des Hülsenelements auf der Stange (11) bezüglich des Hülsenelements (12) gedreht wird.

8. Verfahren nach Anspruch 7, in welchem ein Paar von Scheiben (13) an der Stange (11) angeordnet ist, eine benachbart von jedem eines Paares von Hülsenelementen (12), welche jeweils benachbart einem Paar von Hohlraumwandungen positioniert sind, ferner umfassend die Schritte des Einspritzens des aushärtbaren Materials (19) in ein Hülsenelement, Drehen der benachbarten Scheibe zum Abdichten des Hülsenelements und dann Einspritzen des aushärtbaren Materials in das andere Hülsenelement, nachdem zuerst die benachbarte Scheibe zum Abdichten desselben gedreht worden ist.

9. Verfahren nach einem der Ansprüche 2 bis 8, umfassend die Schritte des Bildens einer Mehrzahl von koaxialen Bohrungen (7) zwischen einer Mehrzahl von Hohlräumen (6) in den Gebäudebauteilen (5) und Einführen einer Stange (11) in alle diese Bohrungen und Bilden eines Pfropfens benachbart einer Mehrzahl von Hohlraumwandungen.

10. Anker (10) zur Verwendung bei einem Verfahren nach einem der Ansprüche 1 bis 9, umfassend eine feste Ankerstange, ein an der Ankerstange angeordnetes Hülsenelement (12), wobei das Hülsenelement wenigstens eine Öffnung (17) in seiner Außenwandung aufweist, worin das Hülsenelement eine Öffnung aufweist, um den Eintritt einer Einspritzzuführleitung zu ermöglichen.

11. Anker (10) nach Anspruch 10, umfassend eine Mehrzahl von Hülsenelementen (12).

12. Anker (10) nach Anspruch 10 oder Anspruch 11, ferner umfassend wenigstens eine Scheibe (13), welche an der Stange benachbart dem Hülsenelement (12) angeordnet ist.

13. Anker (10) nach einem der Ansprüche 10 bis 12, worin die Stange (11) eine Oberfläche mit Vertiefungen oder Gewinde umfaßt.

## Revendications

1. Procédé de fixation d'un dispositif d'ancrage (10) dans une cavité (6) dans un élément de construction (5) comprenant les phases consistant à former un premier alésage (7) dans l'élément de construction, ledit alésage comportant une ouverture dans une paroi de ladite cavité, laquelle paroi est à un angle par rapport à l'axe du dispositif d'ancrage, positionner un manchon (12) sur une tige d'ancrage pleine (11), insérer ladite tige dans l'alésage et injecter un matériau durcissable (19) dans le manchon autour de l'extérieur de la tige, caractérisé en ce qu'est prévu un orifice (17) dans la paroi externe du manchon qui est située adjacente à ladite paroi de cavité, de manière que, lorsque le matériau durcissable est injecté dans le manchon, une partie du matériau s'échappe par ledit orifice dans la cavité et forme un bouchon adjacent à ladite paroi de cavité, qui, une fois durci, empêche le dispositif d'ancrage d'être extrait dudit élément de construction.

2. Procédé selon la revendication 1, dans lequel la tige (11) est insérée dans le premier alésage (7), via la cavité (6) et dans un second alésage co-axial (7) ayant son ouverture dans une paroi opposée de la cavité.

3. Procédé selon la revendication 2, dans lequel la tige (11) est insérée dans les deux alésages (7) de manière qu'au moins un orifice (17) dans chaque extrémité du manchon (12) soit positionné adjacent à chacune des parois de cavités opposées.

4. Procédé selon la revendication 2 ou 3, dans lequel une paire de manchons (12) sont positionnés sur la tige (11), espacés, de manière que lorsque la tige est insérée dans les deux alésages (7) un manchon soit positionné adjacent à chaque paroi de cavité.

5. Procédé selon la revendication 4, dans lequel un élément de manchon (22) est positionné sur la tige (11) entre la paire de manchons.

6. Procédé selon l'une quelconque des revendications précédentes, comprenant en outre la phase consistant à positionner une rondelle (13) sur la tige (11) adjacente au manchon (12) pour obturer une extrémité du manchon.

7. Procédé selon la revendication 6, dans lequel la rondelle (13) est tournée sur la tige (11) relativement au manchon (12) pour obturer le manchon.

8. Procédé selon la revendication 7, dans lequel une paire de rondelles (13) sont situées sur la tige (11), une adjacente à chaque manchon (12) de la paire de manchons qui sont positionnés adjacents à chaque paroi de cavité de la paire de parois de cavités, comprenant en outre les phases consistant à injecter le matériau durcissable (19) dans un manchon, tourner la rondelle adjacente pour obturer le manchon puis injecter le matériau durcissable dans l'autre manchon après avoir tout d'abord tourné la rondelle adjacente pour l'obturer.

9. Procédé selon l'une quelconque des revendications 2 à 8, comprenant les phases consistant à former une pluralité d'alésages co-axiaux (7) entre une pluralité de cavités (6) dans les éléments de construction (5) et insérer une tige (11) dans tous lesdits alésages et former un bouchon adjacent à une pluralité de parois de cavités.

10. Dispositif d'ancrage (10) pour utilisation dans le procédé des revendications 1 à 9, comprenant une tige d'ancrage pleine, un manchon (12) situé sur ladite tige d'ancrage, ledit manchon comportant au moins un orifice (17) dans sa paroi externe, dans lequel le manchon comporte un trou pour permettre l'entrée d'un tuyau d'alimentation par injection (27).

11. Dispositif d'ancrage (10) selon la revendication 10, comprenant une pluralité de manchons (12).

12. Dispositif d'ancrage (10) selon la revendication 10 ou 11, comprenant en outre au moins une rondelle (13) située sur la tige adjacente au manchon (12).

13. Dispositif d'ancrage (10) selon l'une quelconque des revendications 10 à 12, dans lequel la tige (11) comporte une surface rainurée ou filetée.
